# EUROPÄISCHE PATENTANMELDUNG

(11) **EP 1 477 327 A1**
(43) Veröffentlichungstag der Anmeldung: **17.11.2004**
(21) Anmeldenummer: 04011396.1
(22) Anmeldetag: 13.05.2004
(51) Int. Cl.: B60B 7/20

(54) **Rad für Kraftfahrzeuge**

(30) Priorität: 15.05.2003 DE 20307627 U
(71) Anmelder: Donhuysen, Sven, 4125 Riehen (CH)
(72) Erfinder: Donhuysen, Sven, 4125 Riehen (CH)
(74) Vertreter: Paul, Dieter-Alfred, Dipl.-Ing.

(57) **Zusammenfassung**

Die vorliegende Erfindung betrifft ein Rad (1) für Kraftfahrzeuge, welches dadurch gekennzeichnet ist, daß das Rad (1) mit einem Rotationskörper (11) versehen ist, der auf dem Rad (1) frei drehbar gelagert ist.

## Beschreibung

Die Erfindung betrifft ein Rad für Kraftfahrzeuge.

Im wesentlichen gibt es zwei Arten von Rädern für Kraftfahrzeuge. Die einfacheren Räder bestehen aus einer Radschüssel und einer an dieser befestigten Felge, welche aus Stahlblech geformt sind. Zunehmend setzen sich gegossene oder geschmiedete Leichtmetallräder durch. Sie können einteilig, aber auch mehrteilig ausgebildet sein, wobei im letzteren Fall Radschüssel und Felge miteinander verschraubt werden.

Räder werden im allgemeinen so ausgebildet, daß sie die Luftzufuhr zu den Bremsen nur wenig beeinträchtigen oder durch ihre besondere Gestaltung aktiv unterstützen, so daß durch die Drehbewegung des Rades Luft in Richtung auf die Bremse gefördert wird. Diese Förderwirkung ist jedoch geschwindigkeitsabhängig und geht gegen null, wenn das Fahrzeug bis zum Stillstand abgebremst wird. Je nach Belastung der Bremse entsteht aber gerade dann ein hoher Bedarf an Wärmeabfuhr.

Der Erfindung liegt die Aufgabe zugrunde, ein Rad für Kraftfahrzeuge so zu gestalten, daß die Wärmeabfuhr gerade bei Stillstand des Kraftfahrzeuges verbessert wird.

Diese Aufgabe wird erfindungsgemäß dadurch gelöst, daß das Rad mit einem Rotationskörper versehen ist, der auf dem Rad frei drehbar gelagert ist, und zwar vorzugsweise auf der Außenseite des Rades. Trotz der drehbaren Lagerung auf dem Rad wird dieser Rotationskörper aufgrund der Restreibung im Lager von der Drehbewegung des Rades nach und nach mitgenommen, so daß er in schnelle Drehbewegung versetzt wird. Diese Drehbewegung hält bei einem Stillstand des Fahrzeuges lange an. Hierdurch entsteht eine Luftverwirbelung, die eine verbesserte Wärmeabfuhr auch bei angehaltenem Fahrzeug bewirkt. Durch entsprechende Formgebung des Rotationskörpers kann sogar eine gezielte Luftförderung in Richtung auf die Bremse erzeugt werden.

Der Rotationskörper ist vorzugsweise rotationssymmetrisch ausgebildet, so daß er einfach auszuwuchten ist. Er kann beispielsweise mehrere Speichen aufweisen, die radial nach außen verlaufen. Durch entsprechende Formgebung der Speichen kann eine gezielte Luftförderung bewirkt werden.

Der Rotationskörper ist zweckmäßigerweise über ein zentrales Lager an dem Rad gelagert, das abnehmbar an dem Rad befestigt ist.

Nach einem weiteren Merkmal der Erfindung ist vorgesehen, daß der Rotationskörper derart geformt ist, daß er durch Fahrtwind in Drehbewegung versetzt wird. Dies kann beispielsweise durch entsprechende Luftleitflächen an dem Rotationskörper bewirkt werden, und zwar zweckmäßigerweise in Drehrichtung des Rades.

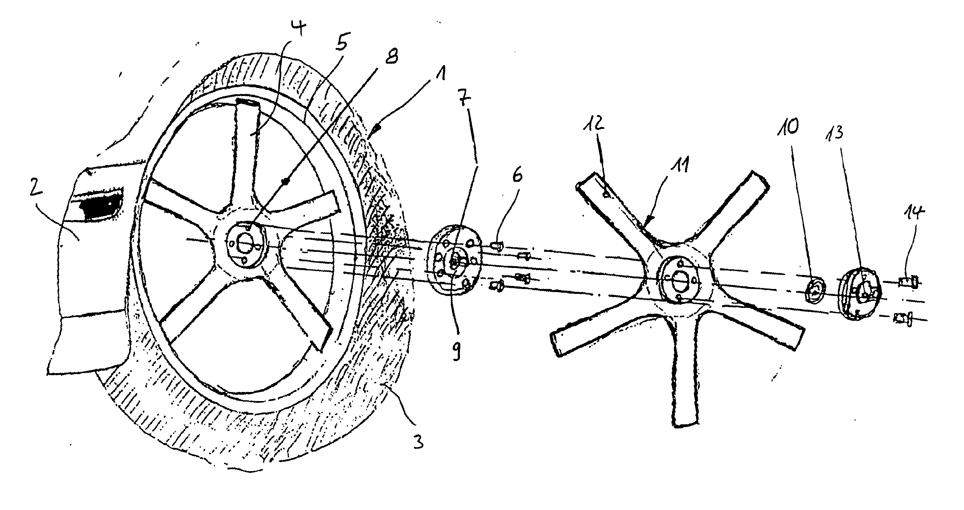

In der Zeichnung ist die Erfindung anhand eines Ausführungsbeispiels näher veranschaulicht. Sie zeigt in perspektivischer Darstellung ein Rad 1, das in einem Radkasten 2 eines Fahrzeuges läuft. Auf das Rad 1 ist ein Reifen 3 aufgezogen.

Das Rad 1 ist als einteiliges Leichtmetallrad ausgebildet. Es hat fünf Radspeichen - beispielhaft mit 4 bezeichnet -, die außenseitig eine Felge 5 tragen.

Die Befestigung des Rades 1 am Achsschenkel ist nach Art einer Explosionsdarstellung gezeigt. Sie erfolgt über vier Schrauben - beispielhaft mit 6 bezeichnet -, die durch eine Verbindungsscheibe 7 und durch Radnabenlöcher - beispielhaft mit 8 bezeichnet - gesteckt und mit dem Lager des Achsschenkels verschraubt sind, so daß sich das Rad 1 auf dem Achsschenkel frei drehen kann.

Das Verbindungselement 7 hat eine Aufnahme 9 für ein Kugellager 10. Auf dem Kugellager 10 ist ein Rotationskörper 11 frei drehbar gelagert. Der Rotationskörper 11 ist rotationssymmetrisch ausgebildet und hat fünf sich radial nach außen erstreckende Arme. Er paßt in den von der Felge 5 umgrenzten Raum und kann sich gegenüber dem Rad 1 frei drehen. Zur Abdeckung des Kugellagers 10 ist eine Abdeckscheibe 13 vorgesehen, die mittels Schrauben - beispielhaft mit 14 bezeichnet - an dem Rotationskörper 11 befestigt ist.

In montiertem Zustand hat der Rotationskörper 11 nur einen geringen Abstand zu den Radspeichen 4. Bei einer Drehbewegung des Rades 1 wird der Rotationskörper 11 aufgrund der Restreibung des Kugellagers 10 in Drehrichtung des Rades 1 mitgenommen. Wird das Fahrzeug angehalten, dreht sich der Rotationskörper 11 noch längere Zeit weiter und erzeugt hierdurch eine Luftverwirbelung, - bei entsprechender Formgebung der Arme 12 - auch eine gezielte Luftförderung in Richtung auf die durch das Rad 1 abgedeckte Bremse. Außerdem entsteht durch die Drehbewegung des Rotationskörpers 11 ein Aufmerksamkeit erregender optischer Effekt.

## Patentansprüche

1. Rad (1) für Kraftfahrzeuge, **dadurch gekennzeichnet, daß** das Rad (1) mit einem Rotationskörper (11) versehen ist, der auf dem Rad (1) frei drehbar gelagert ist.

2. Rad nach Anspruch 1, **dadurch gekennzeichnet, daß** der Rotationskörper (11) auf der Außenseite des Rades (1) angeordnet ist.

3. Rad nach Anspruch 1 oder 2, **dadurch gekennzeichnet, daß** der Rotationskörper (11) rotationssymmetrisch ausgebildet ist.

4. Rad nach einem der Ansprüche 1 bis 3, **dadurch gekennzeichnet, daß** der Rotationskörper (11) mehrere Speichen (12) aufweist.

5. Rad nach Anspruch 4, **dadurch gekennzeichnet, daß** die Speichen (12) radial nach außen verlaufen.

6. Rad nach einem der Ansprüche 1 bis 5, **dadurch gekennzeichnet, daß** der Rotationskörper (11) über ein zentrales Lager (10) an dem Rad (1) gelagert ist.

7. Rad nach Anspruch 6, **dadurch gekennzeichnet, daß** das Lager (10) an dem Rad (1) abnehmbar befestigt ist.

8. Rad nach einem der Ansprüche 1 bis 7, **dadurch gekennzeichnet, daß** der Rotationskörper (11) derart geformt ist, daß er durch Fahrtwind in Drehbewegung versetzt wird.
